# EUROPEAN PATENT APPLICATION

(11) **EP 4 477 503 A1**
(43) Date of publication of application: **18.12.2024**
(21) Application number: 22951775.0
(22) Date of filing: 31.10.2022
(51) Int. Cl.: B62D 25/20, B60R 5/04

(54) **REAR FLOOR ASSEMBLY AND VEHICLE**

(30) Priority: 20.07.2022 CN 202210864298
(71) Applicant: Voyah Automobile Technology Company Ltd., Hanyang District Wuhan City, Hubei 430050 (CN)
(72) Inventor: ZHAI, Huan, Wuhan, Hubei 430050 (CN); HOU, Chunsheng, Wuhan, Hubei 430050 (CN); YU, Botao, Wuhan, Hubei 430050 (CN); ZHOU, Zhongbiao, Wuhan, Hubei 430050 (CN); HAN, Jianyong, Wuhan, Hubei 430050 (CN)
(74) Representative: Valet Patent Services Limited
(86) International application number: PCT/CN2022/128810
(87) International publication number: WO 2024/016513

(57) **Abstract**

A rear floor assembly and a vehicle. The rear floor assembly (1000) comprises a panel assembly (100), a rear floor frame (200), a rear dash-board assembly (300) and a trunk storage box (400). The panel assembly (100) includes a floor panel (110), and a seat back crossbeam (120) which is configured for installing rear seats. The trunk storage box (400) is located in an installation region enclosed by the rear dash-board assembly (300) and the rear floor frame (200), and is connected to the rear dash-board assembly (300) and the rear floor frame (200) via a connection edge. A box body (410) of the trunk storage box (400) having a storage cavity directly constitutes a bottom plate of the trunk, and fully utilizes a space below the floor panel of a vehicle body, thereby providing sufficient storage space for a vehicle.

## Description

### CROSS-REFERENCE TO RELATED APPLICATIONS

This application claims the priority to a Chinese patent application No. 202210864298.5 filed on July 20, 2022 and entitled "rear floor assembly and vehicle", the entire contents of which are incorporated herein by reference.

### TECHNICAL FIELD

The present invention relates to the technical field of automobiles, and in particular to a rear floor assembly and a vehicle.

### BACKGROUND

In order to generate a storage space for a trunk on a rear floor assembly of vehicles in the related art, a common way is to weld several sheet metal panels to form the storage space at a trunk region of panels of the rear floor assembly, which will significantly increase a weight of a vehicle body, and has problems about production processes such as difficult sealing and complicated procedures.

In summary, in the related art there are problems that design and molding for the trunk of the rear floor assembly are difficult, and there are also technical problems such as small storage space and low space utilization.

### SUMMARY

The application provides a rear floor assembly and a vehicle, that can provide sufficient storage space, ensure structural strength, and improve space utilization.

According to a first aspect of the application, a rear floor assembly is provided, including: a panel assembly, including a floor panel and a seat back crossbeam which is connected to an upper surface of the floor panel; rear floor frame, which is connected to a lower surface of the floor panel, comprising two longitudinal beams that are disposed along a width direction of a vehicle, and at least two crossbeams that are connected to the longitudinal beams and disposed at an interval along a length direction of the vehicle a rear dash-board assembly, which is connected to a rear end of the longitudinal beam and encloses an installation region with the rear floor frame; a trunk storage box, which is located in the installation region, comprising a box body that has a storage cavity and a connection edge that is connected to the box body , the connection edge being continuous to be disposed along a peripheral surface of the box body and being connected to both the rear dash-board assembly and the rear floor frame.

According to a first aspect of the application, a vehicle is provided, including the rear floor assembly of the first aspect.

### BRIEF DESCRIPTION OF DRAWINGS

FIG. 1 is a schematic structural diagram of a rear floor assembly according to one or more embodiments of the application.
FIG. 2 is a schematic structural diagram of a panel assembly of the rear floor assembly of FIG. 1.
FIG. 3 is a schematic longitudinal section view of the panel assembly of FIG. 2.
FIG. 4 is a schematic structural diagram of a rear floor frame of the rear floor assembly of FIG. 1.
FIG. 5 is a schematic structural diagram of a longitudinal beam of the rear floor frame of the rear floor assembly of FIG. 4.
FIG. 6 is a schematic front diagram of a first crossbeam of the rear floor frame of the rear floor assembly of FIG. 2.
FIG. 7 is a schematic top view of the first crossbeam of FIG. 6.
FIG. 8 is a schematic exploded diagram of the first crossbeam of FIG. 6.
FIG. 9 is a schematic structural diagram of a rear dash-board assembly of the rear floor assembly of FIG. 1.
FIG. 10 is a schematic structural diagram of a rear dash-board inner plate of the rear dash-board assembly of FIG. 9.
FIG. 11 is an installation structural diagram of a trunk storage box of the rear floor assembly of FIG. 1 from a bottom view.
FIG. 12 is the installation structural diagram of a support rod of the trunk storage box of FIG. 11.
FIG. 13 is the installation structure diagram of the support rod of the trunk storage box of FIG. 12 from another angle of view.
FIG. 14 is a perspective view of the trunk storage box of the rear floor assembly of FIG. 1.
FIG. 15 is a bottom view of the trunk storage box of FIG. 14.
FIG. 16 is a cross-sectional view of an un-glued lap edge of the trunk storage box of FIG. 14.
FIG. 17 is a cross-sectional view of a glued lap edge of the trunk storage box of FIG. 14.
FIG. 18 is a schematic diagram of a reinforcement structure of the trunk storage box of FIG. 15.

Reference numerals: 1000, rear floor assembly;
100, panel assembly; 110, floor panel; 111, concave region; 112, through longitudinal-rib; 120, seat back crossbeam; 130, anti-submergence bracket; 140, installation plate;
200, rear floor frame; 210, longitudinal beam; 211, longitudinal beam body; 212, front installation section; 213, rear installation section; 220, first crossbeam; 221, crossbeam upper plate; 222, crossbeam lower plate; 223, middle crossbeam section; 224, end crossbeam section; 225, joint section; 226, transition section; 227, collapse rib; 230, second crossbeam; 240, third crossbeam; 241, crossbeam body; 242, connection portion;
300, rear dash-board assembly; 310, rear dash-board inner plate; 320, rear dash-board outer plate; 330, inner-plate left support plate; 340, inner-plate right support plate; 350, lock installation plate;
400, trunk storage box; 410, box body; 411, connection edge; 412, lap edge; 413, connection plate; 414, installation hole; 415, primary positioning hole; 416, secondary positioning hole; 417, limitation rib; 418, height limitation protrusion; 420, support rod; 430, pipeline bracket; 440, bottom-guard-plate bracket; 450, rear guard bracket; 460, buckle hole; 470, adhesive glue; 480, reinforcement structure; 481, first reinforcement rib; 482, inner-ring convex rib; 483, outer-ring convex rib; 490, connection member.

### DESCRIPTION OF EMBODIMENTS

In the related art, a rear floor panel of new energy vehicles is a flat panel, or is formed by welding several sheet metal panels to have a storage region. If the rear floor panel is directly made as a flat panel, a space under a rear floor is wasted and there is not more abundant storage space provided for customers. If the rear floor panel is formed by welding several sheet metal panelsto have a storage region, a vehicle body will have a significantly increased weight, and a production process for the vehicles has problems such as difficult sealing and complicated procedures.

By utilizing one or more embodiments of the application, the above-mentioned technical problems can be solved. The rear floor assembly and the vehicle provided by one or more embodiments of the application can provide sufficient storage space, ensure structural strength and improve space utilization. It should be noted that in the art, a length direction of a vehicle is usually referred to as an X direction or a longitudinal direction; a width direction of the vehicle is referred to as a Y direction or a lateral direction; and a height direction of the vehicle is referred to as a Z direction or a vertical direction. The interpretations of relevant directional expressions in the following embodiments can all refer to the above content.

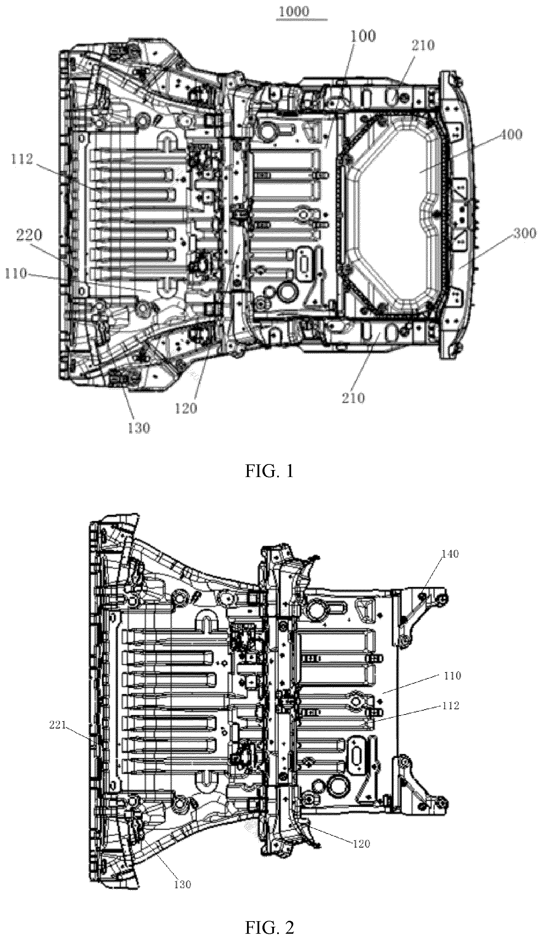

As shown in FIG. 1, in a first aspect of the application, a rear floor assembly 1000 is provided, including a panel assembly 100, a rear floor frame 200, a rear dash-board assembly 300 and a trunk storage box 400 . The panel assembly 100 includes a floor panel 110 and a seat back crossbeam 120 connected to an upper surface of the floor panel 110. The rear floor frame 200, which is connected to a lower surface of the floor panel 110, includes two longitudinal beams 210 that are disposed along the width direction of the vehicle, and at least two crossbeams that are connected to the longitudinal beams 210 and disposed at an interval along the length direction of the vehicle. The rear dash-board assembly 300 is connected to a rear end of the longitudinal beam 210, and encloses an installation region with the rear floor frame 200. A trunk storage box 400 is located in the installation region, and includes a box body 410 which has a storage cavity and a connection edge 411 which is connected to the box body 410. The connection edge 411 is continuous to be disposed along a peripheral surface of the box body 410, and is connected to both the rear dash-board assembly 300 and the rear floor frame 200.

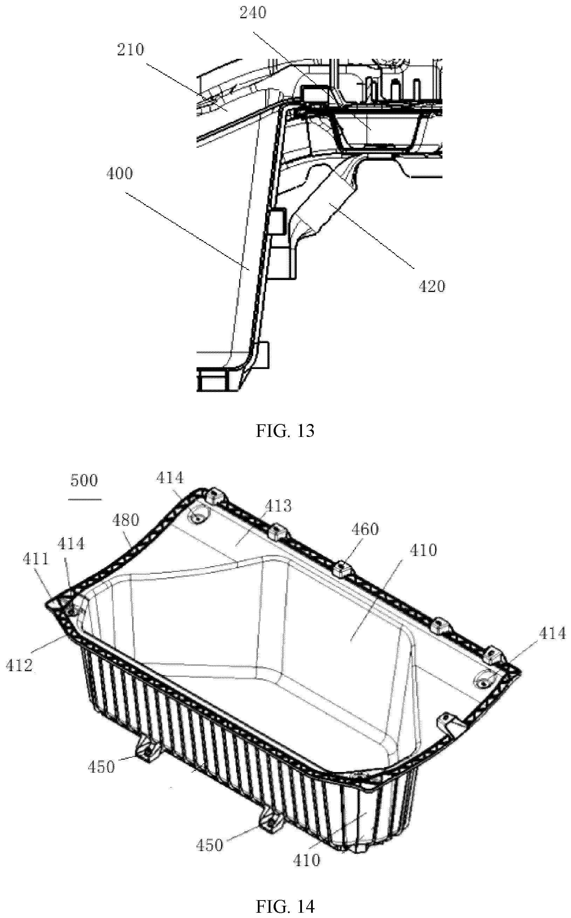

Referring to FIG. 1, the floor panel 110 is used as an installation base for installing a frame structure, various components and parts of devices of a vehicle. The longitudinal beam 210 is connected to two sides of the floor panel 110 in the width direction, and the rear dash-board assembly 300 is connected to the longitudinal beam 210 and encloses the installation region with the rear floor frame 200. The installation region is located at a position for a trunk of the vehicle, that is, the floor panel 110 only covers a front section of a frame of the rear floor assembly 1000, so that a portion of the frame corresponding to the trunk forms a hollow installation region. The trunk storage box 400 is disposed in the installation region as an independent storage structure, such that a space below the floor panel 110 of a vehicle body is fully utilized and a sufficient storage space is provided for the vehicle. Referring to FIG. 14, the trunk storage box 400 includes the box body 410 which has the storage cavity, and a connection edge 411 connected to the box body 410. The connection edge 411 is continuous to be disposed along the peripheral surface of the box body 410, and is connected to the rear dash-board assembly 300, the longitudinal beam 210 and a third crossbeam 240 through the connection edge 411. The trunk storage box 400 directly constitutes a panel that covers a rear section of the frame of the rear floor assembly 1000. At the same time, an inner profile surface of the box body 410 directly constitutes an appearance surface of the trunk. Therefore, there is no need to develop additional interior molded components for shielding, reducing a cost of the trunk storage box 400.

The application does not impose any specific limitations on a material of the trunk storage box 400, as long as sufficient support strength can be ensured. In one or more embodiments, the trunk storage box 400 may be made of metal material. In other one or more embodiments, the trunk storage box 400 is a plastic member that is made of composite material and assembled on a sheet metal of the vehicle body by screwing and disposed under the trunk. In some embodiments, a storage box may be made of long glass fiber reinforced polypropylene material and by injection molding technology to reduce weight. The trunk storage box 400 of the application, compared with a trunk with a traditional sheet metal structure, can reduce weight by about 1.49 kg and reduce costs.

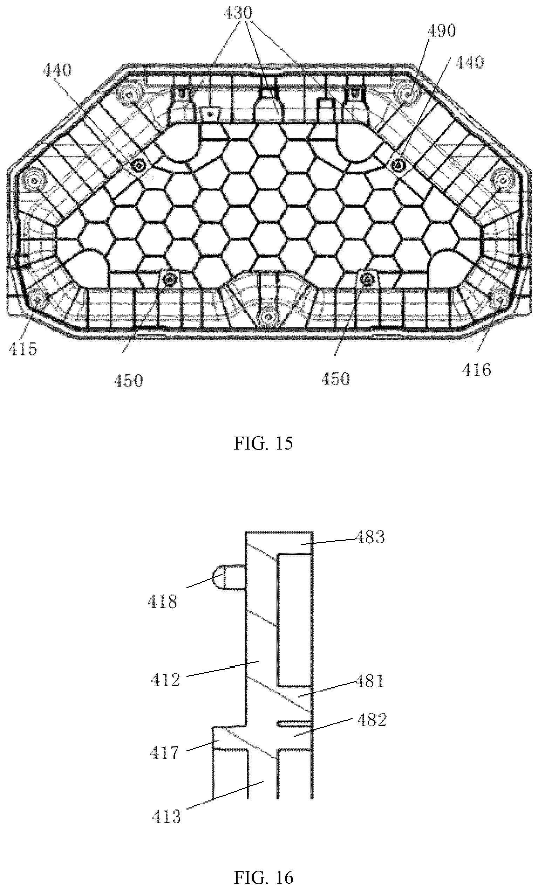

The application does not specifically limit a structure of the connection edge 411, and as long as the box body 410 can be overlapped at the frame of the rear floor assembly 1000 through the connection edge 411. Referring to FIG. 14 and FIG. 15, in some embodiments, the connection edge 411 may include a lap edge 412 and a connection plate 413 that connects the lap edge 412 and the box body 410. The lap edge 412 is configured to overlap the longitudinal beam 210, the third crossbeam 240, and the rear dash-board assembly 300. The connection plate 413 is provided with at least four installation holes 414 that are distributed along a circumferential direction. The installation holes 414 are provided with a connection member 490 therein for implementing a connection and fixation through the connection member 490 that passes through the installation hole 414.

A width dimension and height dimension of the connection edge 411 of the trunk storage box 400 may be designed according to a required bond strength. The application does not impose any specific limitations on a specific number of the installation holes 414. In order to ensure a stability of the connection, in one or more embodiments, the number of the installation holes 414 may be more than four, and the installation holes 414 are distributed at least at four corners of the trunk storage box 400, thereby ensuring a connection strength and effectively preventing the connection edge 411 from deforming. The number of the installation holes 414 may be 7, 8 or more. A diameter of the installation hole 414 may be designed to be larger to facilitate assembly. The diameter of the installation hole 414 is between D+1 mm and D+6 mm, where D is a diameter of a bolt.

The application does not make any specific limitations on a connection structure for the connection edge 411 to the longitudinal beam 210, the third crossbeam 240, and the rear dash-board assembly 300. The connection edge 411 may be directly connected and fixed to the longitudinal beam 210, the third crossbeam 240 and the rear dash-board assembly 300 body; or sheet metals may be added to inner sides that are close to the installation region of the longitudinal beam 210, the third crossbeam 240 and the rear dash-board assembly 300, and the connection edge 411 may be connected to the longitudinal beam 210, the third crossbeam 240, and the rear dash-board assembly 300 through these sheet metals.

In order to ensure an installation accuracy of the trunk storage box 400 and ensure an sealed connection after the lap edge 412 is overlapped, in one or more embodiments, referring to FIG. 15, a primary positioning hole 415 and a secondary positioning hole 416 are provided on the connection edge 411 which are spaced apart along a length direction of the trunk storage box 400. The rear floor assembly 1000 also includes positioning pins provided in the primary positioning hole 415 and the secondary positioning hole 416 to preliminarily determine a position of the trunk storage box 400 so as to facilitate an insertion of the connection member 490.

The application does not specifically limit a shape and structure of the primary positioning hole 415 / the secondary positioning hole 416 and a fitting way for the primary positioning hole 415 / the secondary positioning hole 416 with the positioning pins. In one or more embodiments, the primary positioning hole 415 and the secondary positioning hole 416 may both be shaped to match a shape of the positioning pin. The primary positioning hole 415 /secondary positioning hole 416 and the positioning pin may adopt an interference fit, a transition fit or a clearance fit.

In order to reserve an adjustment space, in one or more embodiments, the primary positioning hole 415 and the positioning pin are in the transition fit or the clearance fit. The secondary positioning hole 416 is a waist-shaped hole that extends along the length direction (i.e., a width direction of a vehicle body) of the trunk storage box 400, and a width of the waist-shaped hole is not less than a diameter of the positioning pin. The primary positioning hole 415 and the secondary positioning hole 416 have different structures, to ensure an accuracy and at the same time facilitate a quick alignment during assembly. In one or more embodiments, the diameter of the positioning pin is 6 mm, the primary positioning hole 415 is disposed to have a diameter of 6.5 mm, and the secondary positioning hole 416 is a waist-shaped hole which has a dimension of 6.5 mm × 10 mm.

Since a sheet metal of the vehicle body is relatively thin, it is not convenient to provide a sink groove thereon. In one or more embodiments, the positioning pin is a stud welded to the sheet metal of the vehicle body, and thus it is convenient for observation and can facilitate the quick alignment during assembly. The lap edge 412 overlaps the sheet metals of the vehicle body. The connection plate 413 is positioned relative to the sheet metals through positioning pins and is connected and fixed through a connection member 490, so that a modality of the trunk storage box 400 can be well ensured by avoiding excessively long overhangs.

Since the trunk storage box 400 is connected to a frame structure of a floor assembly only through the connection edge 411 located at a top of the trunk storage box 400, a bottom of the trunk storage box 400 is not supported, which can easily lead to an insufficient modality of the bottom of the trunk storage box 40, resulting in a high noise on road. In addition, the storage box will be loaded with items during actual use by customers, and therefore it is necessary to consider loading a certain load on a rear storage box during a vehicle road test during a design stage. After the load is added, since a center of gravity of the trunk storage box 400 is low, there is a great risk of insufficient strength and durability.

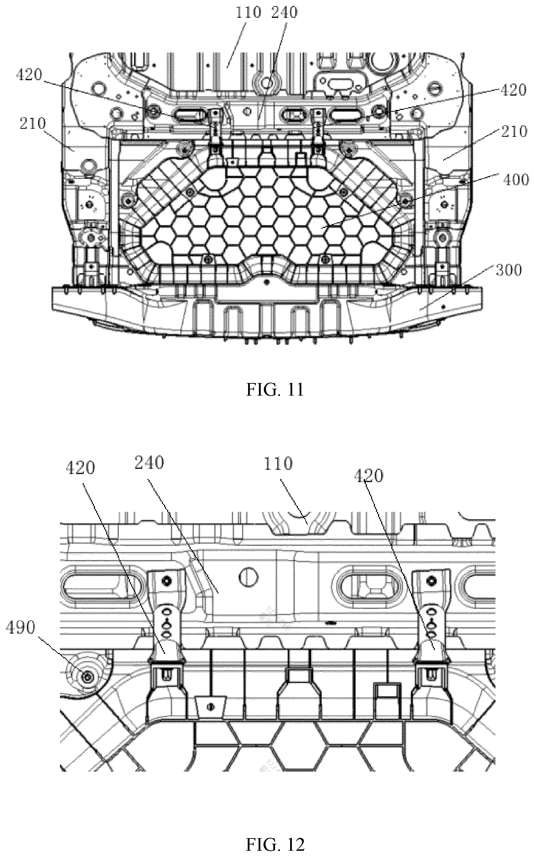

In order to effectively improve a strength and durability of the storage box and prevent problems such as cracking of the storage box, as shown in FIG. 12 and FIG. 13, in one or more embodiments, the rear floor assembly 1000 may also include a support rod 420. A first end of the support rod 42 is connected to an outer peripheral surface of the box body 410, and a second end of the support rod 42 is connected to the rear floor frame 200, the second end being higher than the first end. With adding a support structure at a bottom of the box body 410 and connecting the support structure to the rear floor frame 200 with higher strength for example through a screw connection which may combine an adhesive bonding, problems of insufficient modality and insufficient durability of the trunk storage box 400 are well solved. In one or more embodiments, the rear floor frame 200 welded with nuts can be fixed to the support rod 420 by bolts, and the trunk storage box 400 which has two mounting points riveted with nuts may also be fixed to the support rod 420 by bolts.

In one or more embodiments, referring to FIG. 12 and FIG. 13, the number of the support rods 420 is more than two, and more than two support rods 420 are spaced apart and parallel to one other along a length direction of the box body 410. The first end of the support rod 420 is connected to an outer surface of the box body 410 close to the third crossbeam 240. The support rod 420 significantly improves an NVH (Noise, Vibration, Harshness) modality performance, and can effectively suppress a swing of the storage box in the X direction. A simulation result shows that the modality of the storage box can be significantly improved, and a durability and strength of the storage box are effectively improved to prevent problems such as cracking. In one or more embodiments, the support rod 420 is stamped and formed from a metal tube to maintain rigidity and strength.

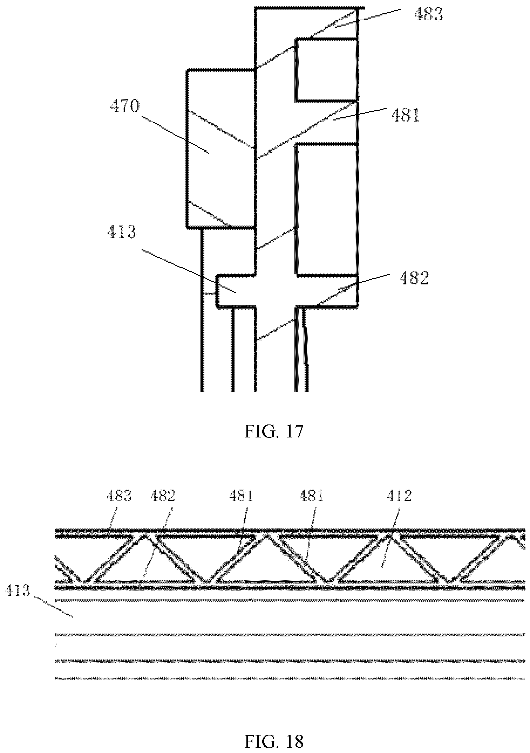

In one or more embodiments, referring to FIG. 16 and FIG. 17, a lower surface of the connection edge 411 is provided with a limitation rib 417 and a height limitation protrusion 418 at an interval. The limitation rib 417 is continuous to be provided in a circumferential direction of the connection edge 411. The height limitation protrusion 418 is located at an outer side of the limitation rib 417. On the one hand, the limitation rib 417 and the height limitation protrusion 418 improve a strength of the trunk storage box 400 for carrying, and significantly increase a structural strength of the connection edge 41 which is provided in a flange form, and thus the connection edge 411 is not easy to deform when being formed. On the other hand, the limitation rib 417 have a glue blocking function to prevent a glue from overflowing after pressed, thereby better ensuring a bonding strength and sealing. The height limitation protrusion 418 ensures a space in the Z-direction which is required for a gluing for the connection edge 411, thereby avoiding a technical problem of insufficient space in the Z-direction caused by a deformation and collapse of the connection edge 411 which results in an insufficient bonding strength and poor sealing performance of an adhesive glue 470. In one or more embodiments, the adhesive glue 470 is a polyurethane polymer material, and a plastic rear storage box can be bonded to the sheet metal of the vehicle body by applying a circle of the adhesive glue 470 on a back surface of the lap edge 412, pressing the adhesive glue 470 during assembly, and then solidifying the adhesive glue 470.

In one or more embodiments, in order to further improve a connection strength of the trunk storage box 400 and provide mounting points for components of the vehicle to avoid providing additional mounting points on the sheet metal of the vehicle body, the trunk storage box 400 is also provided with at least two mounting brackets. The at least two mounting brackets are respectively connected to the box body 410 and the connection edge 411, so that the plastic trunk storage box 400 can provide multiple functional mounting points on a top surface, a bottom surface or a side surface thereof. In an embodiment, each mounting bracket adopts a structure that is riveted with nuts and thus has low cost and good structural strength.

Referring to FIG. 14 and FIG. 15, in some embodiments, the mounting bracket may include a pipeline bracket 430 disposed at an outer side of the box body 410. In some embodiments, the mounting bracket may also include a bottom-guard-plate bracket 440 and a rear guard bracket 450 disposed at a bottom surface of the box body 410, and thus a support strength and stability may be enhanced by a rear protective plate connecting to the rear dash-board assembly 300. The mounting bracket may also include a buckle hole 460 which is disposed on the connection edge 411 for fixing a wiring harness, thereby avoiding providing a bracket on the sheet metal of the vehicle body for fixing, and implementing an integrated function of the storage box, that is, the trunk storage box 400 of the rear floor assembly 1000 integrates the following functions: fixing high-voltage wires and OBC water pipes, providing mounting points for a bottom guard plate and the rear protective plate and so on.

In order to increase an overall strength and avoid deformation of the connection edge 411, in one or more embodiments, referring to FIG. 14, a reinforcement structure 480 is provided at an upper surface of the connection edge 411. The application does not specifically limit a position for locating the reinforcement structure 480, and the reinforcement structure 480 may be disposed on the lap edge 412 and/or the connection plate 413. In some embodiments, since the trunk storage box 400 is carried at a bottom portion of the vehicle body and an upper surface of the connection edge 411 is directly exposed to an interior of the vehicle body, in order to avoid affecting an appearance, improve a user experience, and avoid the reinforcement structure 480 from affecting movements of the user, and at the same time to strengthen a structural strength of the lap edge 412, the reinforcement structure 480 is disposed on the lap edge 412. The lap edge 412 only occupies a small area of the connection edge 411 and is located outside of the connection edge 411, which can avoid affecting the appearance and improve the user experience.

In one or more embodiments, referring to FIG. 18, the reinforcement structure 480 includes a first reinforcement rib 481, an inner-ring convex rib 482 and an outer-ring convex rib 483. The inner-ring convex rib 482 and the outer-ring convex rib 483 are both continuous to be disposed along the circumferential direction of the connection edge 411. The inner-ring convex rib 482 and the outer-ring convex rib 483 are disposed at an interval, and the inner-ring convex rib 482 is located in a region surrounded by the outer-ring convex rib 483. The first reinforcement rib 481 is located between the inner-ring convex rib 482 and the outer-ring convex rib 483, and is connected to the connection edge 411, the inner-ring convex rib 482 and the outer-ring convex rib 483.

In order to further enhance a strength of the lap edge 412, referring to FIG. 16, in one or more embodiments, projections of the limitation rib 417 and the inner-ring convex rib 482 that are projected on a plane where the lap edge 412 is located overlap one another, and the limitation rib 417 overlaps the reinforcement structure 480 which is located on the upper surface, thereby significantly increasing the structural strength of the connection edge 41 which is provided in a flange form, and thus the connection edge 411 is not easy to deform when injection molded.

In order to further enhance the strength of the lap edge 412, in one or more embodiments, in the trunk storage box 400, the first reinforcement rib 481 may be disposed at an angle to both the inner ring rib 482 and the outer-ring convex rib 483, so that the first reinforcement rib 481 and the inner ring rib 482 and/or the outer-ring convex rib 483 enclose a triangular reinforcement area. The application does not specifically limit a shape of the first reinforcement rib 481 and a molding way of the triangular reinforcement area. In some embodiments, the first reinforcement rib 481 may be formed by continuously bending a plurality of V-shaped ribs with the V-shaped rib as a smallest unit, as shown in FIG. 18. In other embodiments, the first reinforcement rib 481 may also adopt an X-shaped rib, a cross-shaped rib, or a diamond-shaped rib as the smallest unit, and a plurality of the smallest units are continuously connected head-to-tail. The structure that adopts the V-shaped rib as the smallest unit is simple and easy to form.

In some embodiments, in order to fully utilize a volume of the box body 410, the box body 410 has a same shape as the storage cavity. In some embodiments, in order to improve a utilization of the box body 410 while avoiding interfering with a rear wheel, lengths of two opposite cavity walls in a width direction of the box body 410 are different.

Since the bottom surface and four side surfaces of the box body 410 serve as bearing surfaces for storage, in order to ensure that the box body 410 has sufficient strength, in some embodiments, reinforcement ribs are provided on the box body 410. The application does not specifically limit a molding way and distribution of the reinforcement ribs. In some embodiments, an inner surface of the box body 410 can be a smooth plane that has a flat surface without protrusions, and therefore can be used as an appearance surface and is more friendly to storage function requirements for the customers. Referring to FIG. 14, an outer bottom surface of the box body 410 and an outer side surface of the box body 410 are both provided with the reinforcement ribs which are disposed at a position which is invisible at a back surface, thereby ensuring a strength and an appearance of the storage box and a sufficient space of the storage cavity. In order to further enhance a structural strength, in some embodiments, the reinforcement ribs on the outer bottom surface of the box body 410 and the outer side surface of the box body 410 may be connected as a whole to jointly enhance a connection strength between the box body 410 and the connection edge 411. In addition, the cavity walls of the storage cavity of the box body 410 can be connected through a way of arc transition.

In one or more embodiments, the reinforcement ribs on the outer bottom surface of the box body 410 are integrally honeycomb-shaped, as shown in FIG. 15, and fully covers the outer bottom surface of the storage box, thereby effectively ensuring a bearing strength and meeting requirements of static stiffness and modality under a rated load.

In some embodiments, the cavity wall of the box body 410 may be a structure of corrugated plate formed by stamping, and ribs are formed by bending a body thereof to form convex ribs on a side of the storage cavity of the box body 410 and grooves on an outer surface of the box body 410. Therefore, a structural strength of the cavity wall of the box body 410 is better, but the cavity wall of the box body 410 is not suitable as an appearance surface.

In some embodiments, in order to facilitate an installation of the trunk storage box 400, the rear floor frame 200 is provided with an installation plate 140, referring to FIG. 2, the installation plate 140 is disposed at a rear end of the longitudinal beam 210 of the rear floor frame 200, and one installation plate 140 is disposed for each of two longitudinal beams 210. A shape of the installation plate 140 may be designed according to an outer contour of the trunk storage box 400. In an embodiment, if the outer contour of the trunk storage box 400 is a trapezoid, the installation plate 140 may be designed as a triangular plate to supplement the outer contour of the trunk storage box 400 into a rectangular contour for facilitating the installation.

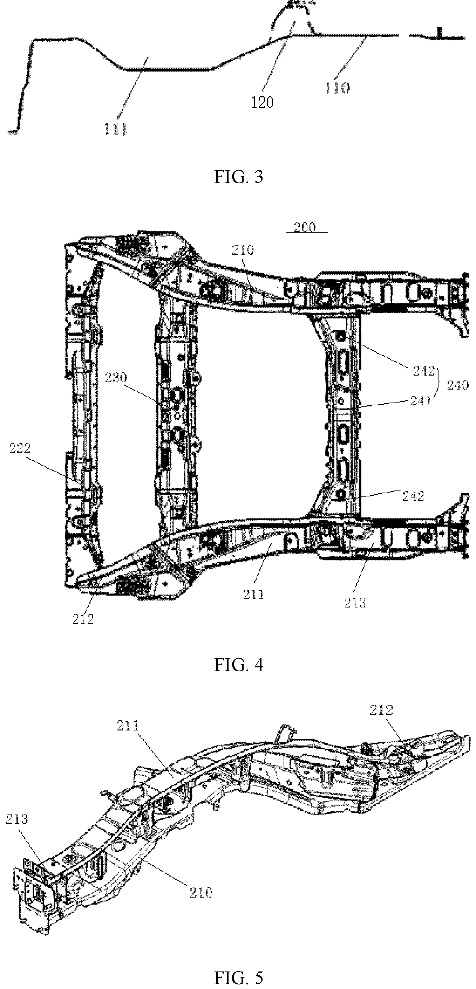

Referring to FIG. 1 and FIG. 4, in some embodiments, the rear floor frame 200 specifically includes three crossbeams, namely a first crossbeam 220, a second crossbeam 230, and a third crossbeam 240 respectively. The first crossbeam 220 is arranged at a front end of the panel assembly 100, the second crossbeam 230 is arranged between the first crossbeam 220 and the third crossbeam 240, and the third crossbeam 240 is arranged at a rear end of the panel assembly 100. The trunk storage box 400 is connected to the third crossbeam 240, that is, the third crossbeam 240 is closer to a rear of the vehicle, and an installation region is formed by the third crossbeam 240, the longitudinal beam 210 and the rear dash-board assembly 300.

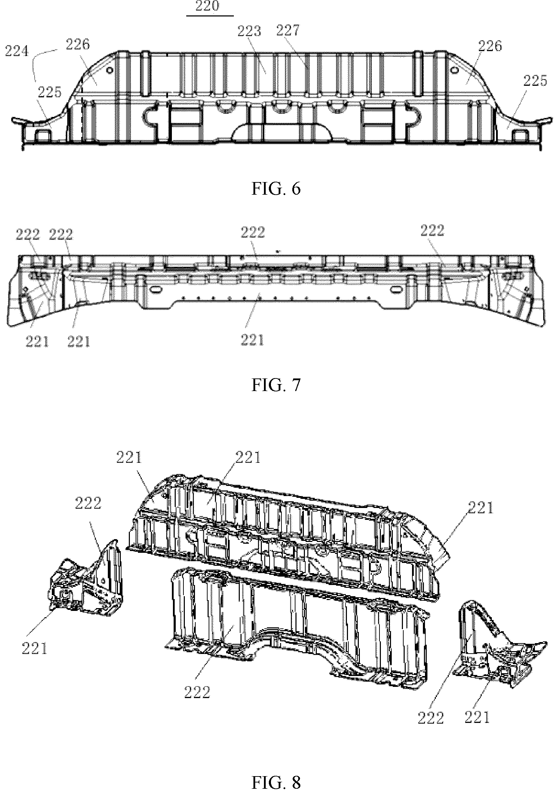

Referring to FIG. 6, in some embodiments, in order to improve a performance of a side pillar for a collision of the vehicle, the first crossbeam 220 includes a middle crossbeam section 223, and end crossbeam sections 224 which are respectively connected to two ends in an axial direction of the middle crossbeam section 223, that is, the first crossbeam 220 includes the end crossbeam section 224, the middle crossbeam section 223 and the end crossbeam section 224 that are distributed in sequence along the axial direction. In some embodiments, the middle crossbeam section 223 and/or the end crossbeam section 224 have a hollow cavity that extends in axial directions, so as to absorb energy through the hollow cavity and conduct the energy in a determined direction, thereby facilitating guiding a direction of collapse. A strength of the middle crossbeam section 223 is greater than that of the end crossbeam sections 224 which are connected to two ends of the middle crossbeam section 223. On the one hand, with the middle crossbeam section 223 which has greater strength, a sufficient structural strength of the first crossbeam 220 is ensured, thereby effectively avoiding a problem of a collision failure caused by a bending of the crossbeam when the collision of the side pillar occurs; on the other hand, with a reasonable distribution of crossbeam sections with different strengths, the first crossbeam 220 is divided into soft regions at two ends and a hard region at a middle portion. The soft regions ares connected to the longitudinal beam 210, such that the direction of collapse can be effectively guided by the soft regions when a multi-point collision of the side pillar occurs. The soft regions can better absorb a first round of a collision energy, reduce a collision acceleration, and guide a collision collapse along an ideal direction, which is advantageous to improving the performance of the side pillar for the collision of the vehicle.

The application does not specifically limit a material and strength of the end crossbeam section 224 and the middle crossbeam section 223, which can be adaptively adjusted according to requirements of different vehicle models. In some embodiments, a yield strength of the end crossbeam section 224 may be 300 MPa to 500 MPa, such as 350 MPa, 400 MPa, 450 MPa and so on; a yield strength of the middle crossbeam section 223 may be 1300 MPa to 1500 MPa, such as 1350 MPa, 1400 MPa, 1450 Mpa and so on. In some embodiments, the end crossbeam section 224 may be mainly composed of a common high-strength plate. The middle crossbeam section 223 may be composed of an ultra-high strength hot-formed steel plate.

In some embodiments, in order to further guide a Y direction collapse and avoid a problem of failure caused by sudden bending of a crossbeam, a collapse rib 227 is provided at the middle crossbeam section 223, and the collapse rib 227 is disposed at an angle to the axial direction of the middle crossbeam section 223.

Since the end crossbeam section 224 is configured to connect to the longitudinal beam 210, the end crossbeam section 224 first bears a collision force transmitted by the longitudinal beam 210 and serves as a first force-bearing portion of the first crossbeam 220 to transmit an energy to the middle crossbeam section 223 when the multi-point collision of the side pillar occurs. In some embodiments, the end crossbeam section 224 has a hollow cavity that extends in an axial direction to guide a direction of a collapse, absorbs the first round of the collision energy, and reduces the collision acceleration. In some embodiments, a cross-sectional dimension of the hollow cavity of the end crossbeam section 224 may be disposed to increase in a direction from an end to a middle portion of the first beam 220. In an initial stage of the collision of the side pillar, a kinetic energy of the collision can be well absorbed and an acceleration can be reduced. With an increasing intrusion amount of the collision and an increasing cross-sectional area of the hollow cavity, a structure of the end crossbeam section 224 becomes stronger, and thus a remaining energy of the collision can be gradually absorbed better. The hollow cavity can also guide the first beam 220 to collapse in the Y direction, thereby effectively preventing the first beam 220 from suddenly bending and failing, and improving the performance of the side pillar for the collision.

Referring to FIG. 6, in one or more embodiments, in order to absorb an energy of the collision and achieve a better effect of guiding for the collapse, the end crossbeam section 224 includes a joint section 225 for connecting the longitudinal beam 210, and a transition section 226 for connecting the joint section 225 and the middle crossbeam section 223. Since the transition section 226 is connected to the middle crossbeam section 223, in some embodiments, the transition section 226 has a hollow cavity, and a cross-sectional dimension of the hollow cavity of the transition section 226 increases along the direction from the end to the middle portion of the first crossbeam 220, so that when the collision occurs and an energy is transmitted transitions from the soft region to the hard region, an increasing cross-sectional dimension of the hollow cavity is more in line with a mechanical law of energy absorption during the collision, can better alleviate the energy of the collision, and ensure a safety of occupants.

The application does not limit a specific structure of the joint section 225. In some embodiments, the joint section 225 may also have a hollow cavity, and the hollow cavity of the joint section 225 may be a structure that has a variable cross-section or a structure that has a constant cross-section along an axial direction. In one or more embodiments, a variation trend of the cross-sectional dimension the hollow cavity of the joint section 225 is the same as that of the transition section 226 to enhance technical effects of guiding the collapse, enhancing a strength, and absorbing the energy.

The application does not make any specific limitations on an implementation way of increasing the cross-sectional dimension of the hollow cavity. As long as the cross-sectional area is increased, a changing trend of a height (corresponding to a dimensional change in a height direction of the vehicle body) of the hollow cavity and a changing trend of a width (corresponding to a dimensional change in a length direction of the vehicle body) of the hollow cavity may be same or different. In some embodiments, a height of the hollow cavity of the end crossbeam section 224 tends to increase along the direction from the end to the middle portion of the first beam 220; a width of the hollow cavity of the end crossbeam section 224 tends to decrease along the direction from the end to the middle portion of the first beam 220, so as to guide the energy to be dispersed in a height direction. At the same time, a height dimension of a portion of the hollow cavity at the end crossbeam section 224 tends to increase, which makes a structure of the end crossbeam section 224 strong, significantly reduces the intrusion amount of the collision, is more in line with a mechanical law of energy absorption during the collision, and can better alleviate the energy of the collision.

In order to better absorb the energy, in some embodiments, the hollow cavity of the first beam 220 extends through in an axial direction. The middle crossbeam section 223 and the end crossbeam section 224 both have hollow cavities which extend along axial directions. The middle crossbeam section 223 is connected to the two end crossbeam sections 224.

In some embodiments, the middle crossbeam section 223 serves as a primary section for energy absorption and bearing load. In order to ensure an overall structural strength of the middle crossbeam section 223 and avoid breakage of the middle crossbeam section 223, the height of the hollow cavity of the end crossbeam section 224 is not greater than the height of the hollow cavity of the middle crossbeam section 223.

In some embodiments, in order to increase the height while controlling an overall weight, the height of an outer profile surface of the transition section 226 tends to increase, so that the transition section 226 and the middle crossbeam section 223 are integrally arch-shaped. Since the cross-sectional dimension of the middle crossbeam section 223 is much larger than that of ordinary vehicles, and therefore a structure of the middle crossbeam section 223 is stronger, thereby significantly reducing the intrusion amount of the collision in a later period of the collision.

The application does not impose any specific restrictions on a shape of the middle crossbeam section 223 and a structure of the hollow cavity. In some embodiments, dimensions of the hollow cavity of the middle crossbeam section 223 at each cross-sectional position in an axial direction may be approximately the same, and height and width dimensions of the hollow cavity of the middle crossbeam section 223 are approximately unchanged and approximately match dimensions of an end surface of the transition section 226. In other embodiments, a variable cross-section structure may be provided for the middle crossbeam section 223 as required.

In order to better adapt to the mechanical law of energy absorption during the collision and better alleviate the collision energy, in some embodiments, the cross-sectional dimensions of the hollow cavity of the first crossbeam 220 satisfies: a≤b≤5.5 a, where a is a width of a cross section of the hollow cavity, and b is a height of the cross section of the hollow cavity. It should be noted that the hollow cavity is enclosed by inner profile surfaces of the first crossbeam 220, and a height and width of a cross section here are also obtained based on the inner profile surfaces of the first crossbeam 220 as a boundary.

In some embodiments, a smallest cross-sectional dimension of the hollow cavity is located at an end surface of the joint section 225 for connecting the longitudinal beam 210, and at this time b=a. A largest cross-sectional dimension of the hollow cavity is located at an end surface of the transition section 226 for connecting the middle crossbeam section 223, and is located at an entire middle crossbeam section 223, and at this time b=5.5a. With a gradually increasing size of the hollow cavity of the first crossbeam 220, the kinetic energy of the collision can be well absorbed and the acceleration can be reduced at a beginning of the collision of the side pillar. As the intrusion amount of the collision increases, the cross section size of the crossbeam gradually increases and the structure thereof becomes stronger, which can better gradually absorb the remaining energy of the collision and guide the crossbeam to gradually collapse in the Y direction (the width direction of the vehicle body, that is, an axis direction of the first crossbeam 220), thereby effectively preventing the crossbeam from suddenly bending and failing.

Referring to FIG. 6, in some embodiments, the collapse rib 227 may also be provided on the transition section 226 to cooperate with the middle crossbeam section 223 to guide a directional collapse. The application does not specifically limit an extension direction of the collapse rib 227. In some embodiments, the collapse rib 227 extends along the Z direction, that is, a height direction of the first beam 220 is perpendicular to an axial direction of the first beam 220.

Referring to FIG. 7 and FIG. 8, in some embodiments, the first beam 220 may be configured as a split structure. The first beam 220 includes an crossbeam upper plate 221 and a crossbeam lower plate 222. The crossbeam upper plate 221 and the crossbeam lower plate 222 together enclose a hollow cavity. In some embodiments, the crossbeam upper plate 221 and the crossbeam lower plate 222 may both be bent plates which have at least two surfaces to form L-shaped plates. Two L-shaped plates are butted to form a rectangular hollow cavity. In some embodiments, the crossbeam upper plate 221 and the crossbeam lower plate 222 may each include at least three end plates to be connected to form a Z-shaped bending plate. A splicing of two Z-shaped bending plates is achieved by overlapping edges thereof, which is convenient for assembly and connection. In some embodiments, the upper crossbeam plate 221 may be integrally formed with the floor panel 110, and then snap-fitted, assembled and connected to the lower crossbeam plate 222 as a whole.

Referring to FIG. 1 and FIG. 2, in some embodiments, the rear floor frame 200 further includes an anti-submergence bracket 130 which is formed by stamping high-strength steel plates. The anti-submergence bracket 130 is disposed above two ends of the first crossbeam 220. Since the end crossbeam section 224 of the first crossbeam 220 is relatively low in height and cannot directly support seats, the anti-submergence bracket 130 is provided to supplement a height difference between the end crossbeam section 224 and the middle crossbeam section 223. In some embodiments, the anti-submergence bracket 130 for the seat is provided on a rear side of an upper plate of the first crossbeam 220.

Referring to FIG. 1 and FIG. 2, the second crossbeam 230 includes a crossbeam body, and connection members which are located at two ends of the crossbeam body. The crossbeam body and the connection members are all formed by stamping high-strength steel plates. The third crossbeam 240 includes a crossbeam body 241, and connection portions 242 which are connected to two ends of the crossbeam body 241. The crossbeam body 241 serves as a reinforcement beam for a rear suspension of the rear floor. The crossbeam body 241 and the connection portions 242 are all formed by stamping high-strength steel plates. The third crossbeam 240 may connect the longitudinal beam 210 and a C-pillar of the vehicle body via the connection portion 242.

Referring to FIG. 5, the longitudinal beam 210 includes a longitudinal beam body 211, a front installation section 212 and a rear installation section 213 which are respectively connected to two ends of the longitudinal beam body 211. The first crossbeam 220 is connected to the front installation section 212. The second crossbeam 230 and the third crossbeam 240 are both connected to the longitudinal beam body 211. In some embodiments, the front installation section 212 and the longitudinal beam body 211 are made of hot-formed steel, and the rear installation section 213 is formed by stamping high-strength steel plates, so that strengths of the front installation section 212 and the longitudinal beam body 211 are greater than that of the rear installation section 213. In other embodiments, the longitudinal beam body 211, the front installation section 212 and the rear installation section 213 are all made of hot-formed steel, thereby effectively ensuring a strength and dynamic stiffness performance of each mounting point.

In one or more embodiments, referring to FIG. 5, the front installation section 212, the longitudinal beam body 211 and the rear installation section 213 of the longitudinal beam 210 all include an upper plate and a lower plate. The upper plate and the lower plate of the longitudinal beam 210, and a side assembly of the vehicle body enclose a cavity to improve a strength of the longitudinal beam. Support plates are disposed at front mounting points and rear mounting points of a sub-frame of the vehicle to the longitudinal beam 210 to improve a dynamic stiffness at the mounting points. The longitudinal beam body 211 is provided with two middle support plates. The support plates are also provided inside the front installation section 212 and the rear installation section 213, such that structures thereof have high strength.

Referring to FIG. 1 and FIG. 2, in one or more embodiments, the seat back crossbeam 120 of the panel assembly 100 is arranged in a middle portion of the floor panel 110. The seat back crossbeam 120 is configured to support a seat back, specifically, the seat back crossbeam 120 supports the seat back through a bracket. Connection members are provided at two ends of the seat back crossbeam 120. The seat back crossbeam 120 and the connection members are all formed by stamping high-strength steel plates. The seat back crossbeam 120 is located between the second crossbeam 230 and the third crossbeam 240 in a length direction of a vehicle.

Referring to FIG. 3, in one or more embodiments, a front end of the floor panel 110 of the panel assembly 100 includes a concave region 111 that is recessed downward. The first crossbeam 220 is disposed at a front side of the concave region 111, and the second crossbeam 230 is installed in the concave region 111. The second crossbeam 230 is configured to install rear seats, and the first crossbeam 220 is configured to support seat cushions of the rear seats. Since the second crossbeam 230 is located in the concave region 111, installation heights of the rear seats is relatively low, while the height of the first crossbeam 220 is relatively high. Therefore, when the rear seats are installed, a structure of high front and low rear can be achieved, thereby achieving an anti-submergence effect. In an event of the collision, the seat can be effectively prevented from submerging and causing harm to the occupants, thereby ensuring safety. At the same time, this structure meets installation requirements of frameless seats, thereby ensuring that a thickness of a seat cushion is within a reasonable range, while taking into account a riding comfort.

Referring to FIG. 2, in some embodiments, a through longitudinal-rib 112 is provided at a front of the floor panel 110. The through longitudinal-rib 112 can extend through a longitudinal rib on a front floor, which can effectively solve a problem of an insufficient surface stiffness and an insufficient modality for a floor stepping area and the rear floor. In addition to the through longitudinal-rib 112, the floor panel 110 may also be provided with anon-through longitudinal-rib.

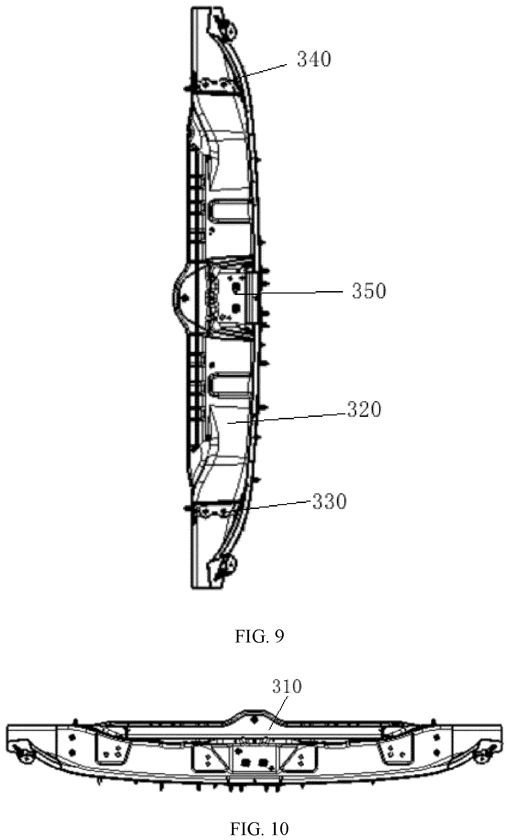

Referring to FIG. 9 and FIG. 10, in one or more embodiments, the rear dash-board assembly 300 includes a rear dash-board inner plate 310, a rear dash-board outer plate 320, an inner-plate left support plate 330, an inner-plate right support plate 340, and a lock installation plate 350 which is configured for installing a tailgate lock ring. The rear dash-board inner plate 310 is disposed at an inner side of the vehicle. The rear dash-board outer plate 320 is disposed at an outer side of the vehicle. The inner-plate left support plate 330 and the inner-plate right support plate 340 are disposed at two sides of a cavity between the rear dash-board inner plate 310 and the rear dash-board outer plate 320. The lock installation plate 350 is disposed at a middle portion of the cavity between the rear dash-board inner plate 310 and the rear dash-board outer plate 320. A middle portion of the rear dash-board assembly 300 provides a mounting point for the trunk storage box 400 , and provides a flange surface for gluing and sealing with the trunk storage box 400.

The rear floor assembly 1000 provided according to one or more embodiments of the application has the following advantages:
1. A front of the floor panel is raised, and the height of the first crossbeam is relatively high, so that an obvious concave region is formed at a front end of the floor panel. The mounting point for the seat is located in the concave region to prevent the seat from sliding forward and submerging during the collision, thereby protecting the safety of the occupants. At the same time, it can meet installation and layout requirements of the frameless seats, and ensures the riding comfort of customers.
2. The seat back crossbeam and the third crossbeam form a double C-pillar ring with beams of an upper vehicle body, which can significantly improve a stiffness and modality performance of the vehicle.
3. The floor panel is provided with higher longitudinal reinforcement ribs and some of the ribs extends through the front floor, which can effectively solve a problem of an insufficient surface stiffness and an insufficient modality for a floor stepping area and the rear floor.
4. The rear dash-board assembly encloses a cavity by an inner panel and an outer panel, and is provided a number of support plates inside. The middle support plate is installed with a tailgate lock ring. Cross-sectional dimensions of an inner cavity of the rear dash-board assembly improve a rigidity and modality of the whole vehicle, while meet a shaping requirements.
5. A plastic storage box is installed under the rear floor, which significantly increases a storage space of a trunk and is more convenient for the customers.

In a second aspect of the application, a vehicle is provided, including the rear floor assembly 1000 of the first aspect of the application. The vehicle may be a pure electric vehicle or a hybrid electric vehicle, and may be a family car, a bus, a truck and so on. Since the application does not improve a specific structure of the vehicle, the structure of the vehicle that has not been changed in the application can refer to the related art, and a specific structure will not be elaborated here. Therefore, the vehicle has all the features and advantages described above for the rear floor assembly 1000, which will not be repeated here.

Although preferred embodiments of the application have been described, additional modifications and variations may be made to these embodiments by those skilled in the art once the basic inventive concepts are known. Therefore, it is intended that the appended claims be interpreted as including the preferred embodiment as well as all modifications and variations that fall within the scope sought for by the application.

Obviously, those skilled in the art can make various modifications and variations to the application without departing from the spirit of and the scope sought for by the application. Thus, if these modifications and variations of the application fall within the scope sought for by the claims of the application and the equivalent technologies thereof, the application is also intended to include these modifications and variations.

## Claims

1. A rear floor assembly, comprising:
a panel assembly, comprising a floor panel and a seat back crossbeam connected to an upper surface of the floor panel;
rear floor frame, connected to a lower surface of the floor panel, and comprising two longitudinal beams that are disposed along a width direction of a vehicle, and at least two crossbeams that are connected to the longitudinal beams and disposed at an interval along a length direction of the vehicle;
a rear dash-board assembly, connected to a rear end of the longitudinal beams and encloses an installation region with the rear floor frame; and
a trunk storage box, located in the installation region, and comprising a box body having a storage cavity and a connection edge connected to the box body, the connection edge being continuous to be disposed along a peripheral surface of the box body and being connected to both the rear dash-board assembly and the rear floor frame.

2. The rear floor assembly according to claim 1, wherein the connection edge comprises a lap edge and a connection plate that connects the lap edge to the box body; the connection plate is provided with at least four installation holes that are spaced apart along a circumferential direction, and a primary positioning hole and a secondary positioning hole that are spaced apart along a length direction of the trunk storage box, the installation hole being disposed with a connection member therein, positioning pins being disposed in the primary positioning hole and the secondary positioning hole; and
the primary positioning hole and the positioning pin are in a transition fit or a clearance fit; and the secondary positioning hole is a waist-shaped hole that extends along the length direction of the trunk storage box, and a width of the waist-shaped hole is not less than a diameter of the positioning pin.

3. The rear floor assembly according to claim 2, further comprising a support rod, wherein a first end of the support rod is connected to the connection edge, and a second end of the support rod is connected to the rear floor frame, the second end being higher than the first end.

4. The rear floor assembly according to claim 1, wherein an inner surface of the box body is a smooth plane; or a cavity wall of the box body is in a structure of corrugated plate.

5. The rear floor assembly according to claim 1, wherein a lower surface of the connection edge is provided with a limitation rib and a height limitation protrusion at an interval, the limitation rib being continuous to be provided in a circumferential direction of the connection edge, the height limitation protrusion being located at an outer side of the limitation rib; and an upper surface of the connection edge is provided with a reinforcement structure.

6. The rear floor assembly according to any one of claims 1 to 5, wherein the rear floor frame comprises three crossbeams, namely a first crossbeam, a second crossbeam and a third crossbeam, the trunk storage box being connected to the third crossbeam; and
the longitudinal beam comprises a longitudinal beam body, and a front installation section and a rear installation section which are respectively connected to two ends of the longitudinal beam body; the first crossbeam is connected to a front installation section, and the second crossbeam and the third crossbeam are both connected to the longitudinal beam body; and the seat back crossbeam is located between the second crossbeam and the third crossbeam in the length direction of the vehicle.

7. The rear floor assembly according to claim 6, wherein the floor panel comprises a concave region that is recessed downward, the first crossbeam being disposed at a front side of the concave region, the second crossbeam being installed in the concave region; and
a front portion of the floor panel is provided with a through longitudinal-rib.

8. The rear floor assembly according to claim 6, wherein the third crossbeam comprises a crossbeam body, and connection portions connected to two ends of the crossbeam body, the connection portions being configured to connect the longitudinal beam and a C-pillar of the vehicle.

9. The rear floor assembly according to claim 6, wherein the first crossbeam comprises a middle crossbeam section, and end crossbeam sections which are respectively connected to two ends in an axial direction of the middle crossbeam section, a strength of the middle crossbeam section being greater than that of the end crossbeam sections; the middle crossbeam section 223 and/or the end crossbeam sections 224 have a hollow cavity that extends in an axial direction; and
a yield strength of the end crossbeam sections is 300MPa~500MPa; a yield strength of the middle crossbeam section is 1300MPa~1500MPa; the middle crossbeam section is provided with a collapse rib thereon, and the collapse rib is disposed at an angle to the axial direction of the middle crossbeam section.

10. A vehicle, comprising the rear floor assembly according to any one of claims 1 to 9.
